# FASCICULE DE BREVET EUROPEEN

(11) **EP 2 756 604 B1**
(45) Date de publication et mention de la délivrance du brevet: **04.11.2015**
(21) Numéro de dépôt: 12767053.7
(22) Date de dépôt: 10.09.2012
(51) Int. Cl.: H04B 3/54, H04L 12/28, H02J 3/00, H02J 13/00, H04L 12/24

(54) **OPTIMISATION D'UN SYSTEME DOMOTIQUE UTILISANT UN RESEAU LOCAL DE COURANT PORTEUR DE LIGNE**
OPTIMIERUNG EINES DOMOTIKYSTEMS UNTER VERWENDUNG EINES LOKALEN STROMLEITUNGSKOMMUNIKATIONSNETZES
OPTIMIZATION OF A HOME AUTOMATION SYSTEM USING A LOCAL POWER LINE COMMUNICATION NETWORK

(30) Priorité: 13.09.2011 FR 1158108
(43) Date de publication de la demande: 23.07.2014
(73) Titulaire: Voltalis SA, 75008 Paris (FR)
(72) Inventeur: HEINTZ, Bruno, F-75015 Paris (FR); OURY, Jean-Marc, F-75007 Paris (FR); LEFEBVRE DE SAINT GERMAIN, Hugues, F-69110 Sainte-Foy-Lès-Lyon (FR); DE CREVOISIER, Stanislas, F-92300 Levallois-Perret (FR); BORNET, Christophe, F-92600 Asnières sur Seine (FR)
(74) Mandataire: Hervouet, Sylvie
(86) Numéro de dépôt international: PCT/FR2012/052015
(87) Numéro de publication internationale: WO 2013/038095

(56) Documents cités:
- EP-A1- 2 200 187
- EP-A2- 1 388 954
- WO-A1-2007/029870
- WO-A2-03/100996
- GB-A- 2 443 009
- US-A1- 2011 102 159

## Description

La présente invention est relative à l'optimisation d'un système domotique comprenant une pluralité d'appareils communicants aptes à échanger entre eux des informations via un réseau CPL bas débit local.

Plusieurs systèmes de communication sont utilisés aujourd'hui pour les réseaux domotiques. L'un des plus populaires, parce qu'il repose sur le réseau électrique déjà existant, est le Courant Porteur de Ligne, ou CPL.

Certaines solutions CPL, proposant un haut débit, présentent l'inconvénient majeur de n'offrir que des portées courtes, de l'ordre de quelques dizaines de mètres. D'autres proposent des portées bien plus importantes, jusqu'à 500 mètres, et sont moins onéreuses, mais au prix de débits relativement faibles (de l'ordre de quelques kilobits par seconde). Ces dernières solutions sont très bien adaptées à de nombreuses applications domotiques telles que la gestion et la commande à distance des appareils électriques (éclairage, chauffage, climatisation, volets roulants, fours), des capteurs (de présence, de température, d'hygrométrie), de télé relève de compteurs intelligents (eau, gaz, électricité), etc.

Cependant, de telles solutions vont présenter des problèmes de fonctionnement si le réseau se densifie, et dépasse quelques dizaines d'appareils communiquant régulièrement sur le réseau, parce que la bande passante disponible ne sera plus alors suffisante pour permettre à chaque appareil de communiquer avec ses interlocuteurs ou ses relais.

En outre, même dans le cas où l'on envisage un système domotique avec un nombre limité d'appareils communiquant via le réseau CPL bas débit local, les différentes phases du réseau de distribution électrique ainsi que les compteurs d'énergie électriques installés chez les particuliers laissent généralement passer les signaux CPL. Il en résulte que d'autres équipements CPL extérieurs au système domotique considéré peuvent venir perturber la ligne électrique et réduire le débit. De même, les communications CPL entre les appareils communicants du système domotique peuvent aller au-delà du réseau local, ce qui peut poser des problèmes de confidentialité.

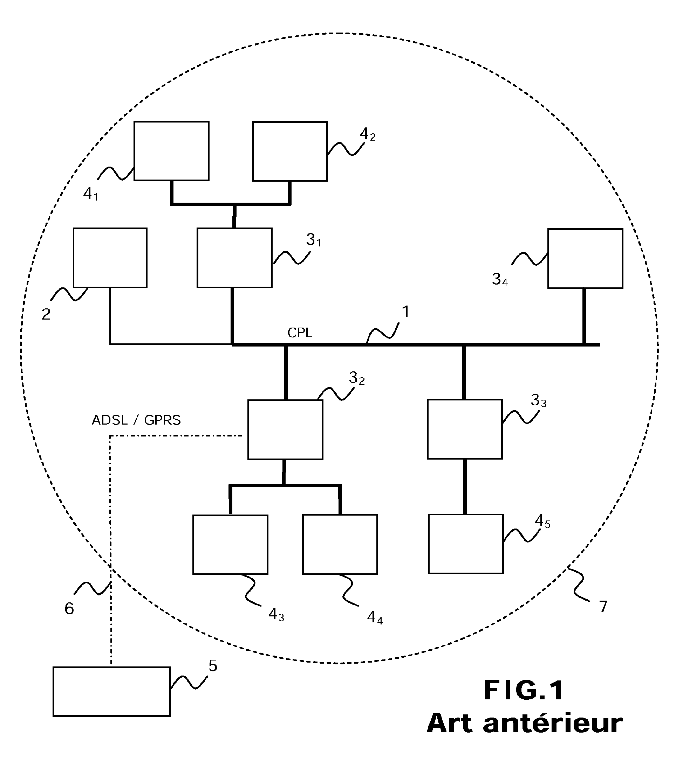

A titre d'exemple non limitatif, on a représenté sur la figure 1 une portion d'un système de mesure et de modulation en temps réel d'une pluralité d'équipements électriques utilisant des appareils communiquant localement entre eux sur un réseau bas débit CPL. Le principe de ce système est notamment décrit dans le document WO 2008/017754 au nom de la Demanderesse. La portion du système permet, dans l'exemple illustré, la gestion d'une pluralité d'équipements électriques (non représentés), tous alimentés à partir d'une même ligne électrique 1 du réseau de distribution électrique, située par exemple au domicile d'un particulier, en aval d'un tableau électrique 2. Dans cet exemple, le système comporte quatre boîtiers pilotes 3₁ à 3₄ et cinq boîtiers modulateurs 4₁ à 4₅ organisés selon un réseau bas débit CPL local. Chaque boîtier modulateur est apte à être relié à un ou plusieurs équipements électriques (tels que des chauffe-eau, des radiateurs électriques, des climatiseurs...), et est utilisé pour mesurer en temps réel les tensions et les courants consommés par ces équipements électriques, et envoyer périodiquement, par exemple toutes les dix minutes, les mesures à une plateforme centrale externe 5 hébergée par un serveur Internet. Pour ce faire, les mesures réalisées par chaque boîtier modulateur sont d'abord transmises au boîtier pilote auquel il est connecté sur le réseau CPL local, puis à la plateforme externe 5 par l'intermédiaire d'un modem de communication sans fil (non représenté) intégré dans le boîtier pilote, et permettant une connexion 6 de type téléphonie par paquet (GPRS, 3G ou 4G) et/ou de type ADSL. Pour ne pas surcharger inutilement la figure, seule la connexion 6 entre le boîtier pilote 3₂ et la plateforme 5 a été représentée en traits interrompus, pour se différencier du réseau local CPL en traits pleins. Dans l'exemple représenté, le boîtier pilote 3₁ sert ainsi de relais aux deux boîtiers modulateurs 4₁ et 4₂, le boîtier pilote 3₂ sert de relais aux deux boîtiers modulateurs 4₃ et 4₄, et le boîtier pilote 3₃ sert de relais au boîtier modulateur 4₅. Les mesures reçues par la plateforme externe 5 sont stockées et peuvent être visualisées à tout moment et depuis n'importe quel lieu par l'utilisateur qui peut se connecter sur son espace utilisateur sur Internet par tout moyen connu. La plateforme externe 5 est quant à elle susceptible d'envoyer aux boîtiers pilotes, par la connexion sans fil, des ordres pour commander l'interruption de l'alimentation de tout ou partie des équipements électriques reliés aux différents boîtiers modulateurs pendant une durée prédéterminée. Les périodes d'interruption sont généralement inférieures à la demi-heure, de sorte que les utilisateurs concernés par les coupures de tout ou partie de leurs appareils électriques, tels que les chauffages ou climatiseurs, ne subissent aucune gêne. Le contrôle de l'alimentation s'effectue par l'intermédiaire des boîtiers modulateurs.

Ce système, outre la possibilité de suivi des consommations par chaque utilisateur, permet de gérer simultanément au niveau de la plateforme centralisée une grande quantité de boîtiers modulateurs et boîtiers pilotes et de moduler plus facilement, à une échelle communale, départementale, régionale ou nationale, la puissance électrique consommée par un ensemble d'utilisateurs, en particulier lors de pics de consommation, sans qu'il soit nécessaire pour les fournisseurs d'énergie électrique de produire plus d'électricité.

Aujourd'hui, les différents boîtiers pilotes et modulateurs d'un tel système sont tous configurés pour émettre sur le réseau CPL à une même puissance d'émission nominale prédéfinie. La zone de communication CPL est représentée schématiquement par le cercle 7 sur la figure 1. Ainsi, la bande passante sur la ligne électrique 1 est déjà occupée, dans l'exemple de la figure 1, par l'ensemble des appareils du réseau CPL, soit ici par neuf appareils en comptant les quatre boîtiers pilotes 3₁ à 3₄ et les cinq boîtiers modulateurs 4₁ à 4₅. L'ajout d'un équipement supplémentaire sur ce réseau CPL ou toute perturbation provenant d'un équipement d'un réseau CPL voisin risque ainsi de saturer la bande passante. La bande passante utilisée peut ainsi rapidement devenir critique sur la ligne électrique, avec le risque de bloquer le réseau, certains appareils n'arrivant plus à communiquer.

La présente invention vise à optimiser la bande passante des systèmes domotiques utilisant un réseau CPL bas débit local.

Pour ce faire, la présente invention a pour objet un procédé d'optimisation d'un système domotique comprenant une pluralité d'appareils communicants aptes à échanger entre eux des informations via un réseau CPL bas débit local, caractérisé en ce qu'il comporte une phase d'ajustement de la puissance d'émission CPL pour chaque nouvel appareil communicant rejoignant le réseau, ladite phase d'ajustement comprenant les étapes successives suivantes:
a) Installation du nouvel appareil apte dont la puissance d'émission CPL est réglée à une puissance maximale prédéfinie dans ledit réseau CPL;
b) Coupure de toute communication en cours sur le réseau CPL, hormis pour le nouvel appareil;
c) Pour chaque appareil existant du réseau CPL auquel ledit nouvel appareil doit être apparié, test de la communication avec ledit nouvel appareil, et, en cas d'échec de communication, augmentation incrémentale automatique de la puissance d'émission CPL de l'appareil existant jusqu'à l'obtention d'une première valeur de puissance d'émission CPL pour laquelle une communication CPL peut être initialisée entre l'appareil existant et le nouvel appareil;
d) A l'issue de l'étape c), réduction automatique de la puissance d'émission CPL du nouvel appareil tant que ladite communication entre chaque appareil existant et le nouvel appareil est opérationnelle.

Le procédé peut comporter en outre une étape d'adaptation dynamique de la puissance d'émission CPL d'au moins un appareil communicant du réseau CPL, au cas où ce dernier rencontre des difficultés de communication avec le ou les appareils du réseau auxquels il est apparié.

Cette étape d'adaptation dynamique comprend par exemple la détection par ledit appareil communicant d'une dégradation de la qualité de signal CPL, suivie d'une tentative de rétablissement de communication en augmentant automatiquement et progressivement sa puissance d'émission CPL jusqu'à rétablissement d'une qualité de communication correcte. En variante ou en combinaison, cette étape d'adaptation dynamique comprend la détection par ledit appareil communicant d'un taux d'échec de communication dépassant un certain seuil, suivie d'une demande de réduction automatique progressive de la puissance d'émission CPL de l'ensemble des appareils communiquant avec l'appareil ayant détecté le problème afin d'optimiser la bande passante consommée par rapport aux nécessités topologiques du système domotique.

La présente invention a également pour objet un système domotique pour la mise en oeuvre du procédé d'optimisation précédent, caractérisé en ce qu'il comporte un équipement «maître» du réseau CPL bas débit, apte à transmettre des signaux de commande à chaque appareil communicant du réseau CPL pour piloter ladite phase d'ajustement de la puissance d'émission CPL, et notamment pour déclencher les étapes b) à d).

Selon d'autres caractéristiques préférentielles du système:
- l'équipement «maître» est soit un boîtier pilote d'installation apte à être installé localement dans le réseau CPL bas débit, soit une plateforme externe centrale hébergée par le réseau Internet, apte à transmettre lesdits signaux de commande via une connexion de type téléphonie par paquet ou ADSL;
- le boîtier pilote d'installation est apte à transmettre lesdits signaux de commande via le réseau CPL bas débit, ou via une liaison distincte du réseau CPL bas débit, notamment une liaison de type ADSL, cellulaire, radio ou Wifi;
- l'un au moins des appareils communicants du réseau CPL bas débit est en outre apte à détecter une dégradation de la qualité de signal CPL, et à augmenter automatiquement sa puissance d'émission CPL pour tenter un rétablissement de communication;
- l'un au moins des appareils communicants du réseau CPL bas débit est en outre apte à détecter un taux d'échec de communication dépassant un certain seuil, et l'équipement «maître» du réseau CPL bas débit est alors apte à commander une réduction automatique de la puissance d'émission CPL de l'ensemble ou d'une partie des appareils du système domotique;
- les appareils communicants du réseau CPL sont des boîtiers modulateurs aptes à être reliés à un ou plusieurs équipements électriques et à mesurer en temps réel les tensions et les courants consommés par ces équipements électriques, et des boîtiers pilotes aptes à transmettre des ordres pour commander l'interruption de l'alimentation de tout ou partie des équipements électriques reliés aux différents boîtiers modulateurs.

Différents aspects de l'invention apparaîtront dans la description suivante, faite en référence aux figures annexées, dans lesquelles :
- la figure 1, déjà décrite ci-avant, représente schématiquement le fonctionnement d'une portion d'un système connu de mesure et de modulation en temps réel de la consommation électrique d'une pluralité d'équipements électriques;
- la figure 2 représente schématiquement le fonctionnement de la portion du système de mesure et de modulation en temps réel de la consommation électrique d'une pluralité d'appareils électriques, modifiée selon les principes de l'invention;
- la figure 3 illustre un système possible pour l'optimisation de la portion de système de la figure 2;
- la figure 4 représente différentes étapes mises en oeuvre dans le procédé selon l'invention.

Dans la suite de l'exposé, les éléments communs aux différentes figures portent les mêmes références.

La présente invention part du constat général selon lequel, hormis les réseaux CPL à topologie dite maillée, utilisée lorsque chaque élément du réseau doit être connecté avec l'ensemble des éléments de ce réseau, il est souvent possible d'adopter une topologie de réseau qui n'impose pas à tous les appareils de devoir communiquer sur toute l'étendue du réseau. Notamment, dans l'exemple de topologie en arbre donné à la figure 1, les boîtiers modulateurs 4₁ et 4₂ n'ont besoin d'échanger des données qu'avec le boîtier pilote 3₁. De même, les boîtiers modulateurs 4₃ et 4₄ n'ont besoin d'échanger des données qu'avec le boîtier pilote 3₂. Enfin, le boîtier modulateur 4₅ doit échanger des données seulement avec le boîtier pilote 3₃. D'autres topologies, telles que la topologie en étoile, la topologie en anneau, ou toute topologie mixte plus complexe, peuvent être utilisées pour regrouper dans un même réseau des équipements terminaux (à l'instar des boîtiers modulateurs 4₁ à 4₅) et des équipements relais (comme les boîtiers pilotes 3₁ à 3₄).

La présente invention propose ainsi d'optimiser les systèmes domotiques utilisant un réseau domotique CPL bas débit par une gestion intelligente de la puissance d'émission, et donc de la portée, des appareils constituant le réseau.

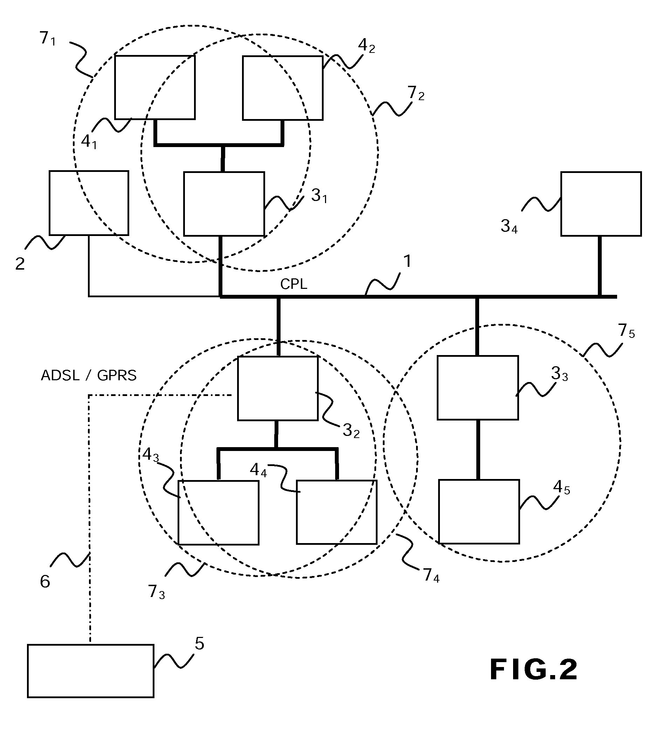

Cela revient notamment à modifier la portion du système représentée à la figure 1, pour obtenir la portion de système représentée à la figure 2, sur laquelle cinq cercles 7₁ à 7₅ schématisent la portée respective des boîtiers modulateurs 4₁ à 4₅ limitée au strict nécessaire, c'est-à-dire n'englobant que le boîtier pilote avec lequel chaque boîtier modulateur doit effectivement communiquer. Ce faisant, la bande passante utilisée en quelque point du réseau que ce soit est plus faible que dans le cas de la figure 1, permettant ainsi le raccordement d'un plus grand nombre d'appareils sur le réseau.

La gestion intelligente de la puissance d'émission CPL conformément à l'invention doit pouvoir être réalisée:
- d'une part, au moins au moment de l'installation d'un nouveau composant dans le réseau CPL, puisque cette installation peut avoir un impact sur la topologie du réseau et sur les distances de communication entre deux appareils ;
- d'autre part, de préférence régulièrement lors de l'utilisation du système, pour prendre en compte toute situation susceptible d'impacter le réseau (cas où la communication entre deux appareils ne passe plus, panne d'un appareil, déplacement d'un appareil, besoins de maintenance, ...).

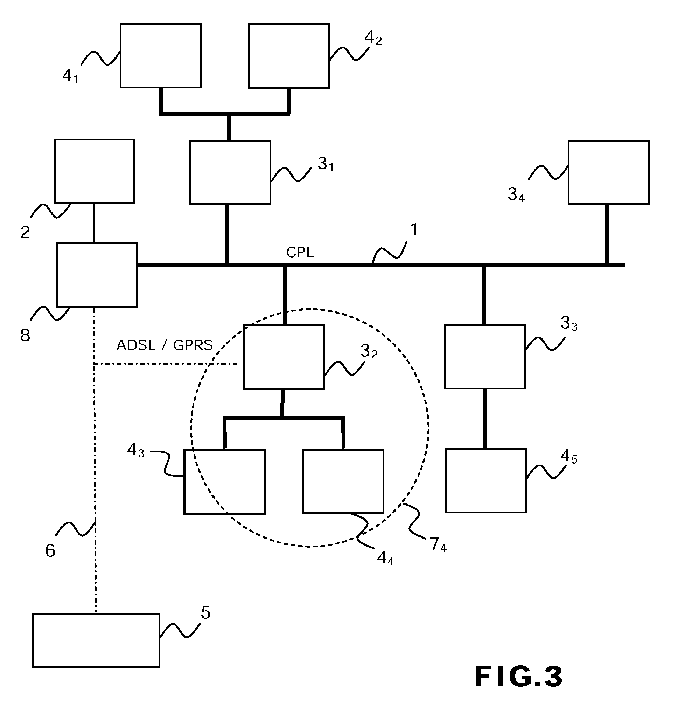

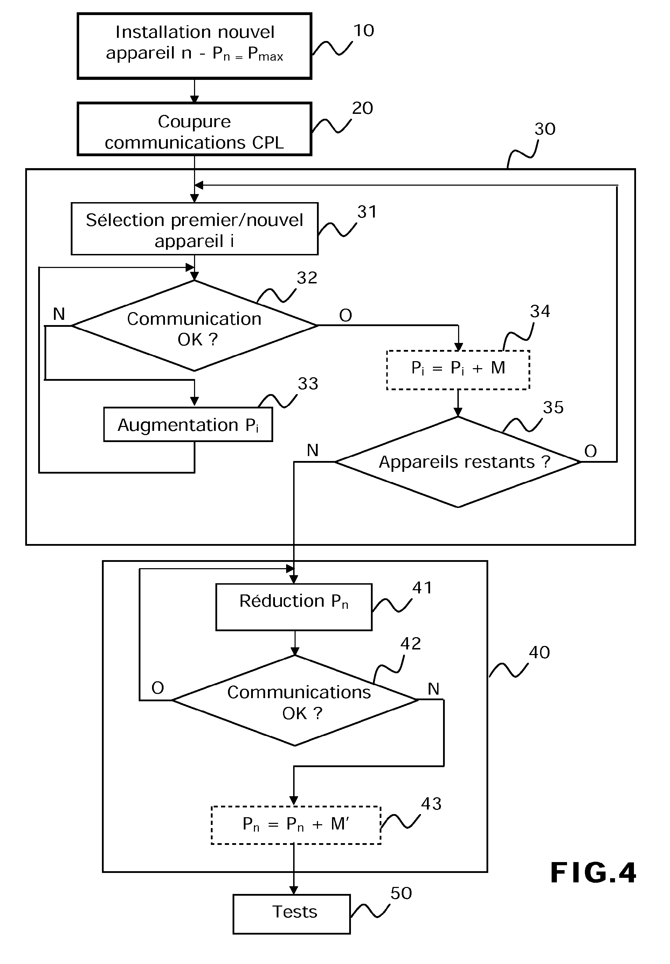

Différentes configurations de systèmes permettant la mise en oeuvre du procédé d'optimisation selon l'invention d'un système domotique utilisant un réseau bas débit CPL local vont à présent être décrites en référence aux figures 3 et 4.

La figure 3 illustre un premier système permettant d'optimiser le système domotique de la figure 2 au moment de l'installation d'un nouvel équipement. On supposera dans la suite que les boîtiers pilotes 3₁ à 3₄, et les boîtiers modulateurs 4₁ à 4₃ et 4₅ sont des appareils déjà existant dans le réseau CPL, et que le nouvel appareil qui doit rejoindre le réseau est le boîtier modulateur 4₄.

Le procédé d'optimisation selon l'invention va consister à prévoir une phase d'ajustement de la puissance d'émission CPL du boîtier modulateur 4₄ pour obtenir la portée juste nécessaire pour permettre une communication de ce boîtier modulateur 4₄ avec les équipements du réseau CPL auxquels il doit être apparié. Dans notre exemple, le boîtier modulateur 4₄ doit seulement pouvoir échanger des données avec le boîtier pilote 3₂.

Pour ce faire, le système d'optimisation va utiliser un équipement «maître» du réseau CPL, capable d'accéder, directement ou via des appareils relais (ici les boîtiers pilotes), à tous les appareils du réseau, à des moments précis. Dans le système représenté sur la figure 3, cet équipement « maître » est un boîtier pilote d'installation 8 installé dans le réseau local CPL, et apte à transmettre des signaux de commande CPL à l'ensemble des appareils du réseau CPL pour piloter le processus d'ajustement de la puissance du nouvel appareil.

Selon une première variante, le boîtier pilote d'installation 8 peut accéder à tous les appareils du réseau CPL pour leur transmettre des signaux de commande en utilisant une liaison distincte du réseau CPL, par exemple une liaison de type ADSL, cellulaire (GPRS/3G/4G), Wifi, radio, ou autre. Dans l'application particulière considérée, le boîtier pilote d'installation 8 est également apte à communiquer avec la plateforme externe 5 via la liaison 6 ADSL/GPRS.

Les différentes étapes mises en oeuvre conformément à l'invention pour la phase d'ajustement du nouvel appareil rejoignant le réseau CPL, ici le boîtier modulateur 4₄, vont à présent être explicitées en référence à la figure 4 :

On commence par installer le nouvel appareil sur le réseau CPL (étape 10). Celui-ci est alors réglé pour émettre des signaux CPL à une puissance prédéfinie Pₙ égale à une valeur maximale Pₘₐₓ, et est donc potentiellement visible par tous les autres appareils du réseau CPL. Le boîtier pilote d'installation 8 va ainsi pouvoir entrer en communication avec ce nouvel appareil afin de valider sa bonne installation matérielle.

Les autres appareils constitutifs du réseau sont alors contrôlés pour interdire toute communication CPL sur le réseau (étape 20). Pour ce faire, un premier signal de commande est transmis par le boîtier pilote d'installation 8 à l'ensemble des appareils du réseau, hormis le nouvel appareil, pour leur intimer l'ordre de couper toute communication CPL éventuellement en cours.

Le boîtier pilote d'installation 8 va ensuite piloter, lors d'une étape 30, l'augmentation automatique éventuelle de la puissance d'émission Pᵢ de tous les appareils existant du réseau CPL auxquels le nouvel appareil doit être apparié, jusqu'à l'obtention d'une valeur de puissance d'émission Pᵢ pour laquelle une communication CPL peut être établie avec le nouvel appareil. Pour ce faire, un signal de commande est transmis par le boîtier pilote d'installation 8 à chaque appareil devant être apparié avec le nouvel appareil, pour déclencher un test de communication bidirectionnelle à partir de la valeur courante de la puissance d'émission Pᵢ dudit appareil. Le boîtier pilote d'installation dispose à cet effet de la liste de tous les appareils du réseau qui doivent être appariés au nouvel appareil, récupérée par exemple au préalable auprès de la plateforme centrale externe 5.

Durant le test de communication bidirectionnelle, chaque appareil devra éventuellement augmenter sa puissance d'émission Pᵢ, jusqu'à ce qu'une communication CPL puisse être effectivement établie avec le nouvel équipement. Ceci est représenté schématiquement par les sous-étapes 31 à 33 de la figure 4. Une fois la connexion établie, la puissance d'émission Pᵢ peut optionnellement est augmentée d'un certain facteur M (typiquement de l'ordre de 20%) afin de donner suffisamment de marge en cas de perturbation future du réseau (sous-étape 34). Il convient de noter qu'un échec de communication alors que la puissance Pᵢ a été augmentée jusqu'à sa valeur maximale possible indique un problème de connexion physique entre l'appareil testé et le nouveau composant, qui devra être réglé par un technicien le cas échéant.

Dans l'exemple considéré, seul le boîtier pilote 3₂ doit être apparié avec le boîtier modulateur 4₄, de sorte que le boîtier pilote d'installation 8 n'aura à commander qu'un seul test de communication bidirectionnelle. Dans le cas plus général où un plus grand nombre d'appareils existant doit être apparié avec le nouvel équipement, l'étape 30 est réitérée pour chaque appareil, comme illustré schématiquement par la sous-étape 35.

A l'issue de l'étape 30, le boîtier pilote d'installation 8 va ensuite piloter, lors d'une étape 40, la réduction automatique de la puissance d'émission CPL Pₙ du nouvel appareil, et ce, tant que la communication entre chaque appareil existant et le nouvel appareil est opérationnelle. Plusieurs algorithmes sont possibles. On peut notamment réduire la puissance par décréments réguliers jusqu'à ce que la communication CPL ne passe plus, comme indiqué par les sous-étapes 41 et 42 de la figure 4. En variante, l'ajustement de la puissance Pₙ est réalisé par dichotomie. Ici encore, la puissance d'émission minimale trouvée Pₙ peut optionnellement être augmentée d'un certain facteur M' (typiquement de l'ordre de 20%) afin de donner suffisamment de marge en cas de perturbation future du réseau (sous-étape 43). Dans l'exemple considéré, la portée du boîtier modulateur 4₄ est ajustée ainsi au minimum nécessaire, comme représenté par le cercle en pointillés 7₄ de la figure 3.

A l'issue de l'étape 40, il est conseillé de tester l'ensemble du réseau, lors d'une étape 50, afin de s'assurer que le nouveau composant ne perturbe pas l'équilibre complet du réseau. Pour cela, le boîtier pilote d'installation 8 émet un ordre de communication continue de chacun des appareils constitutifs du réseau CPL avec l'ensemble de ses interlocuteurs. Pour chacune des paires «appareil - interlocuteur», un test de communication est remonté au boîtier pilote d'installation 8, qui peut ainsi valider ou non l'installation. En cas d'échec de communication entre deux appareils, le boîtier pilote d'installation 8 peut décider de régler la puissance d'émission de l'un ou l'autre des appareils, jusqu'à ce que l'ensemble fonctionne correctement. Lorsque les différents tests ont été menés avec succès, le boîtier pilote d'installation 8 peut transmettre un signal de commande autorisant de nouveau les communications CPL de fonctionnement nominal sur l'ensemble du réseau.

Dans le mode de réalisation du système d'optimisation décrit précédemment, l'équipement «maître» du réseau est constitué du boîtier pilote d'installation 8, qui doit être installé localement. Cet équipement «maître» n'est nécessaire qu'en cas de changement de topologie du réseau (ajout ou retrait d'un appareil, maintenance en cas de panne, etc.). Il peut être enlevé, ou rester inactif, le reste du temps.

D'autres modes de réalisations sont néanmoins envisageables: En particulier, dans l'application considérée ici à titre d'exemple, on a vu que la plateforme centrale 5 est apte à communiquer directement avec les boîtiers pilotes faisant office de relais par des moyens de communication de type téléphonie cellulaire (GPRS / 3G) ou ADSL. Il est ainsi possible que la plateforme centrale et l'équipement «maître» ne constituent qu'une seule entité, ce qui évite d'avoir à installer localement un équipement dédié.

Comme cela a été indiqué précédemment, la gestion intelligente de la puissance d'émission CPL peut avantageusement avoir lieu à tout moment de l'utilisation du système, pour prendre en compte toute situation susceptible d'impacter le réseau (cas où la communication entre deux appareils ne passe plus, panne d'un appareil, besoins de maintenance, ...). Pour ce faire, le procédé d'optimisation selon l'invention comporte en outre une étape d'adaptation dynamique de la puissance d'émission CPL d'au moins un appareil communicant du réseau CPL, au cas où ce dernier rencontre des difficultés de communication avec le ou les appareils du réseau auxquels il est apparié. Par exemple, si le boîtier pilote 3₁ de la figure 2 détecte que sa qualité de signal de communication avec l'un ou l'autre des boîtiers modulateurs 4₁, 4₂ auxquels il est apparié est dégradée en dessous d'un certain seuil, il peut tenter de rétablir la communication en augmentant sa propre puissance d'émission CPL. Si la tentative échoue, une alerte est remontée à la plateforme centrale afin de faire intervenir un technicien.

On peut choisir que tous ou seulement une partie des composants du système domotique soient aptes à effectuer cette gestion dynamique de leur propre puissance d'émission.

De même, si ce boîtier pilote 3₁ détecte un début de saturation de la bande passante (le signal reste fort mais le taux d'échec de communication dépasse un certain seuil), il peut remonter une alerte à l'équipement «maître» (boîtier pilote d'installation 8 si présent ou plateforme centrale 5), qui va alors demander aux différents composants, les uns après les autres, de baisser leur puissance d'émission afin de l'ajuster au plus près des besoins, voire procéder à une refonte de la topologie du réseau en changeant les appairages entre les boîtiers modulateurs et les boîtiers pilotes. Il est à signaler que les conditions d'utilisation du réseau peuvent être modifiées pour des causes exogènes au réseau (en cas de modification de l'installation électrique de l'utilisateur par exemple).

Bien que l'invention ait été décrite dans son application à un système de mesure et de modulation en temps réel d'équipements électriques, on comprendra aisément qu'elle est généralisable à tout système domotique comprenant une pluralité d'équipements aptes à échanger des données dans un réseau CPL local, dès lors que ces équipements ne nécessitent pas d'être agencés selon un réseau totalement maillé.

## Revendications

1. Procédé d'optimisation d'un système domotique comprenant une pluralité d'appareils communicants (3₁-3₄, 4₁-4₅) aptes à échanger entre eux des informations via un réseau CPL bas débit local (1), **caractérisé en ce qu'**il comporte une phase d'ajustement de la puissance d'émission CPL pour chaque nouvel appareil communicant rejoignant le réseau, ladite phase d'ajustement comprenant les étapes successives suivantes:
a) Installation (10) du nouvel appareil (4₄) dont la puissance d'émission CPL est réglée à une puissance maximale prédéfinie dans ledit réseau CPL;
b) Coupure (20) de toute communication en cours sur le réseau CPL, hormis pour le nouvel appareil;
c) Pour chaque appareil existant (3₂) du réseau CPL auquel ledit nouvel appareil doit être apparié, test de la communication avec ledit nouvel appareil (4₄), et, en cas d'échec de communication, augmentation incrémentale automatique (30) de la puissance d'émission CPL de l'appareil existant jusqu'à l'obtention d'une première valeur de puissance d'émission CPL pour laquelle une communication CPL peut être initialisée entre l'appareil existant et le nouvel appareil;
d) A l'issue de l'étape c), réduction automatique (40) de la puissance d'émission CPL du nouvel appareil (4₄) tant que ladite communication entre chaque appareil existant et le nouvel appareil est opérationnelle.

2. Procédé selon la revendication 1, **caractérisé en ce qu'**il comporte en outre une étape d'adaptation dynamique de la puissance d'émission CPL d'au moins un appareil communicant du réseau CPL, au cas où ce dernier rencontre des difficultés de communication avec le ou les appareils du réseau auxquels il est apparié.

3. Procédé selon la revendication 2, **caractérisé en ce que** ladite étape d'adaptation dynamique comprend la détection par ledit appareil communicant d'une dégradation de la qualité de signal CPL, suivie d'une tentative de rétablissement de communication en augmentant automatiquement sa puissance d'émission CPL.

4. Procédé selon l'une quelconque des revendications 2 ou 3, **caractérisé en ce que** ladite étape d'adaptation dynamique comprend la détection par ledit appareil communicant d'un taux d'échec de communication dépassant un certain seuil, suivie d'une réduction automatique de la puissance d'émission CPL d'une partie ou de l'ensemble des appareils du système domotique.

5. Système domotique pour la mise en oeuvre du procédé d'optimisation selon les revendications 1 à 4, **caractérisé en ce qu'**il comporte un équipement «maître» (5; 8) du réseau CPL bas débit, apte à transmettre des signaux de commande à chaque appareil communicant du réseau CPL pour piloter ladite phase d'ajustement de la puissance d'émission CPL, et notamment pour déclencher les étapes b) à d).

6. Système domotique selon la revendication 5, **caractérisé en ce que** ledit équipement «maître» est un boîtier pilote d'installation (8) apte à être installé localement dans le réseau CPL bas débit.

7. Système domotique selon la revendication 6, **caractérisé en ce que** ledit boîtier pilote d'installation (8) est apte à transmettre lesdits signaux de commande via le réseau CPL bas débit.

8. Système domotique selon la revendication 6, **caractérisé en ce que** ledit boîtier pilote d'installation (8) est apte à transmettre lesdits signaux de commande via une liaison distincte du réseau CPL bas débit, notamment une liaison de type ADSL, cellulaire, radio ou Wifi.

9. Système domotique selon la revendication 5, **caractérisé en ce que** ledit équipement «maître» est une plateforme externe centrale (5) hébergée par le réseau Internet, apte à transmettre lesdits signaux de commande via une connexion (6) de type téléphonie par paquet ou ADSL.

10. Système domotique selon l'une quelconque des revendications 5 à 9, **caractérisé en ce que** l'un au moins des appareils communicants (3₁-3₄, 4₁-4₅) du réseau CPL bas débit est en outre apte à détecter une dégradation de la qualité de signal CPL, et à augmenter automatiquement sa puissance d'émission CPL pour tenter un rétablissement de communication.

11. Système domotique selon l'une quelconque des revendications 5 à 10, **caractérisé en ce que** l'un au moins des appareils communicants (3₁-3₄, 4₁-4₅) du réseau CPL bas débit est en outre apte à détecter un taux d'échec de communication dépassant un certain seuil, et **en ce que** ledit équipement «maître» (5; 8) du réseau CPL bas débit est alors apte à commander une réduction automatique de la puissance d'émission CPL d'une partie ou de l'ensemble des appareils du système domotique.

12. Système domotique selon l'une quelconque des revendications 5 à 11, **caractérisé en ce que** les appareils communicants du réseau CPL sont des boîtiers modulateurs (41-45) aptes à être reliés à un ou plusieurs équipements électriques et à mesurer en temps réel les tensions et les courants consommés par ces équipements électriques, et des boîtiers pilotes (31-34) aptes à transmettre des ordres pour commander l'interruption de l'alimentation de tout ou partie des équipements électriques reliés aux différents boîtiers modulateurs.

## Patentansprüche

1. Verfahren zur Optimierung eines haustechnischen Systems, das eine Vielzahl kommunizierender Geräte (3₁-3₄, 4₁-4₅) umfasst, die imstande sind, untereinander Informationen über ein lokales Schmalband-CPL-Netz (1) auszutauschen, **dadurch gekennzeichnet, dass** es eine Justierungsphase der CPL-Sendeleistung für jedes neue kommunizierende Gerät aufweist, das in das Netz integriert wird, wobei die Justierungsphase die folgenden aufeinanderfolgenden Schritte umfasst:
a) Installieren (10) des neuen Geräts (4₄), dessen CPL-Sendeleistung auf eine vordefinierte maximale Leistung in dem CPL-Netz eingestellt ist,
b) Unterbrechen (20) jeder über das CPL-Netz laufenden Kommunikation, außer für das neue Gerät,
c) für jedes vorhandene Gerät (3₂) des CPL-Netzes, mit dem das neue Gerät gepairt werden muss, Kommunikationstest mit dem neuen Gerät (4₄), und bei einem Kommunikationsfehlschlag, automatische inkrementale Erhöhung (30) der CPL-Sendeleistung des vorhandenen Geräts bis zum Erhalt eines ersten CPL-Sendeleistungswerts, für den eine CPL-Kommunikation zwischen dem vorhandenen Gerät und dem neuen Gerät initialisierbar ist,
d) nach Abschluss von Schritt c), automatisches Reduzieren (40) der CPL-Sendeleistung des neuen Geräts (4₄), solange die Kommunikation zwischen jedem vorhandenen Gerät und dem neuen Gerät operativ ist.

2. Verfahren nach Anspruch 1, **dadurch gekennzeichnet, dass** es ferner einen dynamischen Anpassungsschritt der CPL-Sendeleistung mindestens eines kommunizierenden Geräts des CPL-Netz aufweist, wenn es Kommunikationsschwierigkeiten mit dem oder den Geräten des Netzes hat, mit denen es gepairt ist.

3. Verfahren nach Anspruch 2, **dadurch gekennzeichnet, dass** der dynamische Anpassungsschritt die Detektion einer Verschlechterung der Qualität des CPL-Signals durch das kommunizierende Gerät umfasst, gefolgt von einem Versuch der Wiederherstellung von Kommunikation durch automatische Erhöhung seiner CPL-Sendeleistung.

4. Verfahren nach einem der Ansprüche 2 oder 3, **dadurch gekennzeichnet, dass** der dynamische Anpassungsschritt die Detektion einer Kommunikationsfehlschlagrate, die eine bestimmte Grenze überschreitet, durch das kommunizierende Gerät, gefolgt von einer automatischen Reduzierung der CPL-Sendeleistung eines Teils oder aller Geräte des haustechnischen Systems, umfasst.

5. Haustechnisches System für die Umsetzung des Optimierungsverfahrens nach den Ansprüchen 1 bis 4, **dadurch gekennzeichnet, dass** es eine "Master"-Ausrüstung (5; 8) des Schmalband-CPL-Netzes aufweist, die imstande ist, Steuersignale an jedes kommunizierende Gerät des CPL-Netzes zu übertragen, um die Justierungsphase der CPL-Sendeleistung zu steuern und insbesondere um die Schritte b) bis d) auszulösen.

6. Haustechnisches System nach Anspruch 5, **dadurch gekennzeichnet, dass** die "Master"-Ausrüstung ein Steuerkasten (8) der Installation ist, der lokal im Schmalbad-CPL-Netz installierbar ist.

7. Haustechnisches System nach Anspruch 6, **dadurch gekennzeichnet, dass** der Steuerkasten (8) der Installation imstande ist, die Steuersignale über das Schmalband-CPL-Netz zu übertragen.

8. Haustechnisches System nach Anspruch 6, **dadurch gekennzeichnet, dass** der Steuerkasten (8) der Installation imstande ist, die Steuersignale über eine vom Schmalband-CPL-Netz unterschiedliche Verbindung, insbesondere vom Typ DSL, zellular, Funk oder WLAN, zu übertragen.

9. Haustechnisches System nach Anspruch 5, **dadurch gekennzeichnet, dass** die "Master"-Ausrüstung eine zentrale externe Plattform (5) ist, die vom Internet-Netzwerk gehostet ist, die imstande ist, die Steuersignale über eine Verbindung (6) vom Typ Pakettelefonie oder DSL zu übertragen.

10. Haustechnisches System nach einem der Ansprüche 5 bis 9, **dadurch gekennzeichnet, dass** mindestens eines der kommunizierenden Geräte (3₁-3₄, 4₁-4₅) des Schmalband-CPL-Netzes ferner imstande ist, eine Verschlechterung der Qualität des CPL-Signals festzustellen und automatisch seine CPL-Sendeleistung zu erhöhen, um eine Wiederherstellung von Kommunikation zu versuchen.

11. Haustechnisches System nach einem der Ansprüche 5 bis 10, **dadurch gekennzeichnet, dass** mindestens eines der kommunizierenden Geräte (3₁-3₄, 4₁-4₅) des Schmalband-CPL-Netzes ferner imstande ist, eine Kommunikationsfehlschlagrate festzustellen, die eine bestimmte Grenze überschreitet, und dass die "Master"-Ausrüstung (5; 8) des Schmalband-CPL-Netzes dann imstande ist, eine automatische Reduzierung der CPL-Sendeleistung eines Teils oder aller Geräte des haustechnischen Systems zu befehlen.

12. Haustechnisches System nach einem der Ansprüche 5 bis 11, **dadurch gekennzeichnet, dass** die kommunizierenden Geräte des CPL-Netzes Modulationskästen (41-45) sind, die imstande sind, mit einem oder mehreren elektrischen Ausrüstungen verbunden zu sein und in Echtzeit die von diesen elektrischen Ausrüstungen verbrauchten Spannungen und Ströme zu messen, und Steuerkäste (31-34), die imstande sind, Befehle zum Steuern der Unterbrechung der Versorgung aller oder eines Teils der mit den verschiedenen Modulationskästen verbundenen elektrischen Ausrüstungen zu steuern.

## Claims

1. A method for optimizing a home automation system comprising a plurality of communicating devices (3₁-3₄, 4₁-4₅) capable of exchanging information with one another via a local low bandwidth PLC network (1), **characterized in that** it includes a phase for adjusting the PLC transmission power for each new communicating device joining the network, said adjustment phase comprising the following successive steps:
a) Installing (10) the new device (4₄), the PLC transmission power of which is adjusted to a predefined maximum power in said PLC network;
b) Cutting (20) any ongoing communications on the PLC network, except for the new device;
c) For each existing device (3₂) of the PLC network with which the new device must be paired, testing the communication with said new device (4₄), and, in case of communication failure, automatically incrementally increasing (30) the PLC transmission power of the existing device until a first PLC transmission power value is obtained for which a PLC communication can be initialized between the existing device and the new device;
d) At the end of step c), automatically reducing (40) the PLC transmission power of the new device (4₄) as long as said communication between each existing device and the new device is operational.

2. The method according to claim 1, **characterized in that** it further includes a step for dynamic adaptation of the PLC transmission power of the least one communicating device of the PLC network, in the event the latter encounters communication difficulties with the device(s) of the network with which it is paired.

3. The method according to claim 2, **characterized in that** said dynamic adaptation step comprises the detection, by said communication device, of a deterioration of the PLC signal quality, followed by an attempt to reestablish communications while automatically increasing its PLC transmission power.

4. The method according to any one of claims 2 or 3, **characterized in that** said dynamic adaptation step comprises the detection, by said communicating device, of a communication failure rate exceeding a certain threshold, followed by an automatic reduction of the PLC transmission power of part or all of the devices of the home communication system.

5. A home automation system for implementing the optimization method according to claims 1 to 4, **characterized in that** it includes "master" equipment (5; 8) of the low bandwidth PLC network, capable of sending command signals to each communicating device of the PLC network to steer said adjustment phase for adjusting the PLC transmission power, and in particular to initiate steps b) to d).

6. The home automation system according to claim 5, **characterized in that** said "master" equipment is an installation driver (8) able to be installed locally on the low bandwidth PLC network.

7. The home automation system according to claim 6, **characterized in that** said installation driver (8) is able to send said control signals via the low bandwidth PLC network.

8. The home automation network according to claim 6, **characterized in that** said installation driver (8) is able to send said control signals via a separate connection of the low bandwidth PLC network, in particular a connection of the ADSL, cellular, radio or Wi-Fi type.

9. The home automation system according to claim 5, **characterized in that** said "master" equipment is a central external platform (5) hosted by Internet, able to send said control signals via a connection (6) of the packet telephony or ADSL type.

10. The home automation system according to any one of claims 5 to 9, **characterized in that** at least one of the communicating devices (3₁-3₄, 4₁-4₅) of the low bandwidth PLC network is further able to detect a deterioration of the quality of the PLC signal, and to automatically increase its PLC transmission power to attempt to reestablish communication.

11. The home automation system according to any one of claims 5 to 10, **characterized in that** at least one of the communicating devices (3₁-3₄, 4₁-4₅) of the low bandwidth PLC network is further able to detect a communication failure rate exceeding a certain threshold, and **in that** said "master" equipment (5; 8) of the low bandwidth PLC network is then able to command an automatic reduction in the PLC transmission power of part or all of the devices of the home automation system.

12. The home automation system according to any one of claims 5 to 11, **characterized in that** the communicating devices of the PLC network are modulator assemblies (41-45) able to be connected to one or more pieces of electrical equipment and measure, in real-time, voltages and currents consumed by the electrical equipment, and drivers (31-34) able to send orders to command the interruption of the power supply for all or part of the electrical equipment connected to the different modulator assemblies.
